# EUROPEAN PATENT APPLICATION

(11) **EP 4 576 024 A1**
(43) Date of publication of application: **25.06.2025**
(21) Application number: 23218776.5
(22) Date of filing: 20.12.2023
(51) Int. Cl.: G06V 30/10, G06V 30/19, G06V 30/413

(54) **METHOD FOR DETERMINING CAPTIONS OF FIGURES IN DOCUMENT IMAGES**

(71) Applicant: Robert Bosch GmbH, 70442 Stuttgart (DE)
(72) Inventor: Tarsi, Tim Lucca, 74385 Pleidelsheim (DE); Metzen, Jan Hendrik, 71034 Boeblingen (DE)

(57) **Abstract**

Computer-implemented method for classifying an image (10), wherein the classification characterizes a caption (u) of a figure (11) embedded in the image (10), wherein the method comprises the steps of:
• Extracting words (13) and at least one figure (11) from the image (10);
• Clustering the words (10) into clusters of paragraphs (u), wherein each cluster (u) characterizes a paragraph of words in the image (10);
• Determining a match (m) of at least one cluster (u) to the at least one figure (11);
• Providing the at least one cluster (u) as classification characterizing the caption of the at least one figure (11).

## Description

### Technical field

### Prior art

Li et al. "Extracting Figures and Captions from Scientific Publications." Proceedings of the 27th ACM International Conference on Information and Knowledge Management (2018) discloses a method that extract figures by separating text from graphical contents and utilize layout information to detect and disambiguate figures and captions.

Shen et al. "VILA: Improving Structured Content Extraction from Scientific PDFs Using Visual Layout Groups." Transactions of the Association for Computational Linguistics 10 (2021): 376-392 discloses a method that explicitly models Visual LAyout (VILA) groups, i.e., text lines or text blocks, to improve performance on extracting structured content from PDFs tasks.

### Technical background

### Disclosure of the invention

In a first aspect, the invention concerns a computer-implemented method for classifying an image, wherein the classification characterizes a caption of a figure embedded in the image, wherein the method comprises the steps of:
- Extracting words and at least one figure from the image;
- Clustering the words into clusters of paragraphs, wherein each cluster characterizes a paragraph of words in the image;
- Determining a match of at least one cluster to the at least one figure;
- Providing the at least one cluster as classification characterizing the caption of the at least one figure.

The method is especially applicable to images of documents, also known as document images, which comprise figures and captions of the figures. The unstructured information from the document image concerning the position and relation of the figure and its caption are transformed by the method such that a figure (i.e., a sub-area of the image itself) is described by a textual representation of its caption. This information may be understood as being present in the image, wherein the method is especially suitable for extracting this information and bringing it into a structured form in terms of a figure (characterized by a sub-area of the image, i.e., an image that is part of the bigger image, in which the figure resides) and a caption in the form of a machine-readable text assigned to the figure.

The expression "classifying an image" may be understood as the process of assigning a label or category to an image based on its content. In the context of the present invention, the classification characterizes a caption of a figure embedded in the image. The classification may hence especially be given in the form of a text that is the caption as seen for the figure in the image. The resulting classification can be used for various purposes, such as information retrieval or image recognition.

The expression "caption of a figure" may be understood as a textual description or label that provides information about the content of a visual element, such as an image or a diagram, that is embedded within a larger document or context. The caption typically appears adjacent to or below the visual element and may include a title, a brief summary, or explanatory text that helps to contextualize or interpret the visual content. In the context of the present invention, the caption of a figure is used as a means of characterizing or classifying the visual content of the figure, based on the textual information that is associated with it.

The expression "extracting words" may be understood as the process of identifying and isolating individual words from an image. This may involve using optical character recognition (OCR) technology to recognize and convert text within the image into machine-readable format. The extracted words may then be stored in a data structure for further processing. The process of extracting words may also involve identifying the spatial position of each word within the image, which may be used in subsequent steps of the method.

In this sense, the term "word" as used here may actually be understood as a word image, meaning that the term "word" is synonymous with an area of the image at which a word is depicted. The term "word" may especially be understood as a datum comprising the position of a specific word in the image in terms of a preferably rectangular bounding box and/or the pixels within that bounding box. A "word" may be annotated by, e.g., its text in machine-readable format and/or by a category of the word, e.g., whether it is a named entity and/or the type of paragraph the word belongs to.

The term figure may be understood as referring to any graphical representation or image that is embedded within the image. The figure may be of any type, such as a photograph, drawing, chart, or graph, and may contain any type of content, such as text, symbols, or shapes. The use of the phrase "at least one" indicates that there may be multiple figures within the image, but the method is capable of handling cases where there is only one figure present. The figure may be located anywhere within the image and may be of any size or orientation. The method is configured to extract both the words and the figure from the image in order to accurately classify the caption of the figure.

The expression "clustering the words" may be understood as the process of grouping together words that are related to each other based on certain criteria. In the context of the present invention, the clustering of words is performed in order to identify and group together words that belong to the same paragraph in the image. This is achieved by analyzing the spatial position of the words in the image and determining their classification characterizing the type of paragraph they belong to. Once the words have been classified, lines of words are determined based on their common classification and clustering is performed on these lines to group together words that belong to the same paragraph. The resulting clusters of words represent the paragraphs in the image and are used to characterize the caption of the figure embedded in the image. The clustering of words is an important step in the method of classifying an image and enables accurate identification of the caption of the figure.

The expression clusters of paragraphs may be understood as a grouping of words that form a coherent and meaningful unit within the image. These clusters are formed by clustering the extracted words based on their spatial position and classification characterizing the type of paragraph they belong to. Each cluster characterizes a paragraph of words in the image, which may be a caption or a description of the figure embedded in the image. The clustering process involves determining lines of words that have a common classification and clustering them into clusters of paragraphs. The resulting clusters of paragraphs provide a classification characterizing the caption of the at least one figure, which can be used for further analysis or retrieval purposes.

The expression "determining a match" may be understood as the process of comparing the clusters of paragraphs, which have been extracted from the image to the at least one figure that has also been extracted from the image. This comparison is done in order to identify which cluster characterizes the caption of the figure. The determination of a match may involve calculating distances between the clusters and the figure and selecting the cluster with the smallest distance as the match. The determination of a match may also involve solving an optimal assignment problem based on the distances, e.g., using the Hungarian algorithm.

The clusters may be provided in various forms, such as a data structure, a file, or a database entry. The purpose of providing the cluster or clusters is to enable downstream processing, such as searching, indexing, or retrieval of images based on their captions. The provision of the cluster or clusters may also facilitate the refinement or improvement of the method through feedback or iterative processing.

The inventors advantageously found out that the method outperforms other methods from the prior art with respect to the accuracy of a caption determined for a figure.

Preferably, the step of extracting words and at least one figure from the image comprises the steps of:
- Determining the words and their spatial position from the document;
- Providing the image as input to a machine learning system, wherein the machine learning system extracts the at least one figure from the image.

The expression "determining the words and their spatial position" may be understood as the process of identifying the individual words present in the image and determining their respective locations within the image. This may involve analyzing the image to identify areas that contain text, and then using optical character recognition (OCR) technology to recognize the individual characters and convert them into machine-readable text. For determining the spatial position, common word detection methods may be used.

The resulting text may then be processed to identify individual words, and their spatial position within the image may be determined based on their location relative to other words and other visual elements within the image.

The expression "providing the image as input" may be understood as the act of supplying the image to the machine learning system for processing. The step may include a preprocessing of the image before it is used as actual input to the machine learning system.

The machine learning system then takes the image as input and applies its algorithms to extract the at least one figure from the image. For the machine learning system, common approaches may be used such as presented by Li et al.

Advantageously, using a machine learning system to extract the at least one figure from the image is more accurate and less prone to errors than the hand-crafted heuristics used in prior art systems, as the machine learning system can learn from a large dataset and adapt to different types of documents.

In the embodiments presented above, it is also preferred that the step of clustering the words comprises the steps of:
- Determine, for each word of at least a subset of the extracted words, a classification characterizing the type of paragraph a respective word belongs to;
- Determining, for words having a common classification, lines of words in the image;
- Clustering the determined lines of words into clusters of paragraphs.

The expression "subset of the extracted words" may be understood as referring to a portion or a selection of the words that have been extracted from the image in the previous step. The subset may include a limited number of words or all words. The determination of which words belong to the subset may depend on various factors, such as their spatial position in the image, their frequency or relevance for the classification of the image, or other criteria that are deemed appropriate by the practitioner. It should be noted that the subset of the extracted words is not necessarily fixed or predetermined but may vary depending on the specific image and the goals of the method. Hence, the site of the subset may be chosen at random.

The expression "classification characterizing the type of paragraph" may be understood as a process of assigning a label or category to a paragraph based on the content or context of the words within the paragraph. This classification is used to group together words that belong to the same type of paragraph, such as a title, a caption, or a body paragraph. The classification may be determined by analyzing the layout and structure of the image, as well as the content of the words themselves. This process allows for the efficient clustering of words into paragraphs, which is necessary for accurately characterizing the caption of the figure embedded in the image.

The classification may preferably be determined by a layout-aware language model such as the VILA model.

The expression "clustering the determined lines of words" may be understood as the process of grouping together lines of words that have been identified as belonging to the same type of paragraph based on their classification. This involves analyzing the spatial position of the words in the image and determining which lines of words are likely to belong to the same paragraph. Once these lines have been identified, they are clustered together into groups that represent individual paragraphs. This process is important for accurately characterizing the caption of the figure embedded in the image, as it allows for a more precise identification of the relevant text. The clustering may be performed using various algorithms, such as the DBScan algorithm, and may involve additional steps such as determining the median spacing between words in each cluster. Overall, the process of clustering the determined lines of words is a key step in the method for classifying an image described in the claims, and helps to ensure that the resulting classification accurately reflects the content of the image.

The expression "clusters of paragraphs" may be understood as a grouping of lines of words that have been determined to belong to the same type of paragraph based on their classification. The lines of words are first identified based on their common classification, and then clustered together to form a larger unit of text, which is referred to as a cluster of paragraphs. This process of clustering allows for the identification of patterns and similarities within the text, which can aid in the classification and characterization of the image's caption. The clusters of paragraphs may be further analyzed and processed to extract meaningful information and insights from the image.

Advantageously, the claimed method improves the accuracy of the clustering step by determining lines of words in the image that have a common classification. This allows for a more precise grouping of words into lines, which can then be clustered into paragraphs. This results in a more accurate and meaningful grouping of words, which can improve the overall accuracy of the figure-caption extraction process.

Advantageously, the claimed method provides a more efficient clustering of words into paragraphs by clustering the determined lines of words into clusters of paragraphs. This allows for a more efficient grouping of words, which can improve the overall speed and efficiency of the figure-caption extraction process.

In the embodiments presented above, it is preferably possible that determining the classification for each word of at least the subset is achieved by running optical character recognition on the word and providing the recognized word and its spatial position in the image to a layout aware language model, wherein the layout aware language model determines the classification characterizing the type of paragraph.

The expression "spatial position" may be understood as the location of a word within the image. It refers to the specific coordinates of the word in relation to the image's x and y axes. The spatial position can be determined by analyzing the pixel coordinates of the word within the image. This information is important for accurately identifying the location of the word within the image and for providing this information to the layout aware language model for determining the classification characterizing the type of paragraph.

Advantageously, this embodiment provides a more accurate classification of each word in a document by using optical character recognition in combination with a layout aware language model. This results in a more precise identification of the type of paragraph, which can improve the accuracy of subsequent stages in the figure-caption extraction pipeline.

In the embodiments presented above, it is preferably also possible that determining lines of words comprises the steps of:
- Determining, for the words having a common classification, a mean coordinate along the vertical axis of each word respectively;
- Determine clusters of words by clustering the words based on a mean coordinate along the vertical axis, wherein each cluster characterizes a line of words;
- For each cluster, determine a median spacing between words in the cluster and determine second clusters based on the distances between the words.
- Provide the second clusters as lines of words.

The expression mean coordinate may be understood as the average position of a set of coordinates along the vertical axis. In the context of the method, the mean coordinate may especially be a determined by choosing a center between the coordinate along the vertical axis of a top corner of the word and the coordinate along the vertical axis of a bottom corner of the word, i.e., a half-way point along the vertical axis of the word. The mean coordinate is preferably given in terms of an absolute coordinate with respect to the image

The expression median spacing may be understood as a statistical measure that represents the middle value of the distances between words in a cluster of words. It is calculated by arranging the distances in ascending or descending order and selecting the middle value. The median spacing is a useful measure for determining the typical distance between words in a cluster, as it is less sensitive to outliers than other measures such as the mean spacing. By determining the median spacing for each cluster of words, the method can identify the spacing pattern within each line of words and use this information to further cluster the words into second clusters that represent individual lines of words.

The expression "second clusters" may be understood as clusters of words that are determined based on the median spacing between words in each cluster of words that has been previously determined. These second clusters are formed by grouping together words that are separated by a distance that is less than or equal to the median spacing of the cluster. The purpose of determining these second clusters is to further refine the grouping of words into lines of text, which can then be used for the classification of the image.

For clustering, the DBScan algorithm may again be used.

Advantageously, the identification of clusters of words based on the distances between the words, which enables the method to accurately identify lines of words even in documents with multicolumn layouts.

In the embodiments above it is further preferably possible that determining a match of at least one cluster to the at least one figure comprises the steps of:
- Providing distances between the at least one figure and the clusters characterizing paragraphs as cost values;
- Determining the match by solving an optimal assignment problem based on the distances.

The expression "at least one cluster" may be understood as referring to the possibility of there being one or more clusters of paragraphs that are determined during the clustering step of the method.

The expression "providing distances" may be understood as the act of calculating the distance between the at least one figure and the clusters characterizing paragraphs. This calculation may involve determining the spatial relationship between the figure and the words in each cluster and using this information to calculate a distance metric. The distance metric may be based on various factors, such as the Euclidean distance between the centroids of the figure and the cluster, or the distance between the bounding boxes of the figure and the cluster.

Preferably, a coordinate of the vertical axis of a bottom corner of the figure is used for the figures and a coordinate of the vertical axis of a top corner of a cluster is used for determining the distance. The top corner of the cluster may be given by a top corner of the top most word in the cluster. The resulting distances may be used as cost values in the optimal assignment problem.

The expression "clusters characterizing paragraphs" may be understood as referring to the grouping of words extracted from an image into clusters that represent distinct paragraphs within the image. These clusters are formed based on the classification characterizing the type of paragraph to which each word belongs. The clustering process involves determining lines of words that share a common classification and grouping them into clusters of paragraphs. The resulting clusters are then used to determine a match with at least one figure embedded in the image.

Advantageously, this embodiment of the method provides a more accurate and efficient way of determining a match between at least one cluster and at least one figure. By providing distances between the at least one figure and the clusters characterizing paragraphs as cost values, the method can more precisely calculate the match between the two. Additionally, by using the Hungarian algorithm to solve the optimal assignment problem based on the distances, the method can efficiently determine the match, reducing the time and resources required for the process.

In the embodiments presented above it is preferably also possible that at least one but preferably all clusterings are conducted using the DBScan algorithm.

Advantageously, conducting at least one clustering using the DBScan algorithm provides a more efficient and accurate method for identifying regions of high word density. This is because DBScan takes into account the spatial distribution of the words and can handle noise and outliers in the data. Additionally, using DBScan for clustering allows for the identification of the number of clusters based on the distance between words, which is a more robust approach compared to heuristics used in the prior art.

In another aspect, the invention concerns a computer-implemented method for searching a figure embedded in an image comprising the steps of:
- Determining matching pairs of captions and figures according to an embodiment of the method presented above for a plurality of images and/or a plurality of figures, thereby providing a database of pairs of captions and figures;
- Providing a textual query of a figure to be searched;
- Comparing the query to the captions in the database;
- Providing the figure as search result for which the corresponding caption and the provided query have a largest similarity.

The expression "searching a figure embedded in an image" may be understood as a computer-implemented method that involves searching for a specific figure within an image. The figure is embedded within the image, meaning that it is part of the image and not a separate entity. The method involves determining matching pairs of captions and figures for a plurality of images and/or figures, which provides a database of pairs of captions and figures. A textual query of a figure to be searched is then provided, and this query is compared to the captions in the database. The method then provides the figure as a search result for which the corresponding caption and the provided query have the largest similarity. In other words, the method searches for a specific figure within an image by comparing a textual query to captions in a database of pairs of captions and figures, and providing the figure that best matches the query.

The expression "providing a database of pairs of captions and figures" may be understood as the step of creating a collection of matched pairs of captions and figures obtained from a plurality of images and/or a plurality of figures. This database is generated by determining matching pairs of captions and figures according to an embodiment of the method as presented above. The pairs of captions and figures are then stored in a structured manner, such as in a database, for later use in the searching process. The database may include various metadata associated with each pair, such as the source image, the location of the figure within the image, and any other relevant information. The purpose of providing this database is to enable efficient searching of figures based on textual queries by comparing the query to the captions in the database and providing the figure as a search result for which the corresponding caption and the provided query have the largest similarity.

The expression "providing a textual query of a figure to be searched" may be understood as the step in the computer-implemented method for searching a figure embedded in an image where a user inputs a text-based description of the figure they are searching for. This description may include keywords, phrases, or other relevant information that can be used to identify the desired figure based on its caption. The textual query is then compared to the captions in the database of pairs of captions and figures, in order to find the figure that best matches the user's search criteria. The process of providing a textual query may involve using a search bar or other input field in a graphical user interface, or may be carried out through a command line interface or other means of text-based input.

The expression "comparing the query to the captions in the database" may be understood as the step in the computer-implemented method for searching a figure embedded in an image where the textual query of a figure to be searched is compared to the captions in the database of pairs of captions and figures. This comparison is carried out in order to identify the caption in the database that has the largest similarity to the provided query. The comparison may involve using a similarity metric or algorithm to compare the query to each caption in the database and determining the degree of similarity between them. The caption with the highest degree of similarity to the query may then be identified as the corresponding caption for the figure that is provided as the search result. As similarity metric, the word error rate may be used. Alternatively, it is also possible to embed the query and the captions into an embedding space, e.g., using a large language model from the field of natural language processing, and then comparing the resulting embeddings using, e.g., the cosine similarity.

Advantageously, the computer-implemented method of claim 8 provides a database of pairs of captions and figures by determining matching pairs of captions and figures for a plurality of images and/or a plurality of figures. This allows for efficient and accurate searching of figures embedded in images.

Compared to the prior art, the method of provides a more efficient and accurate way of searching for figures embedded in images by utilizing a database of pairs of captions and figures and comparing textual queries to the captions in the database. This results in more precise and relevant search results for the user.

Embodiments of the invention will be discussed with reference to the following figure in more detail. The figure shows:

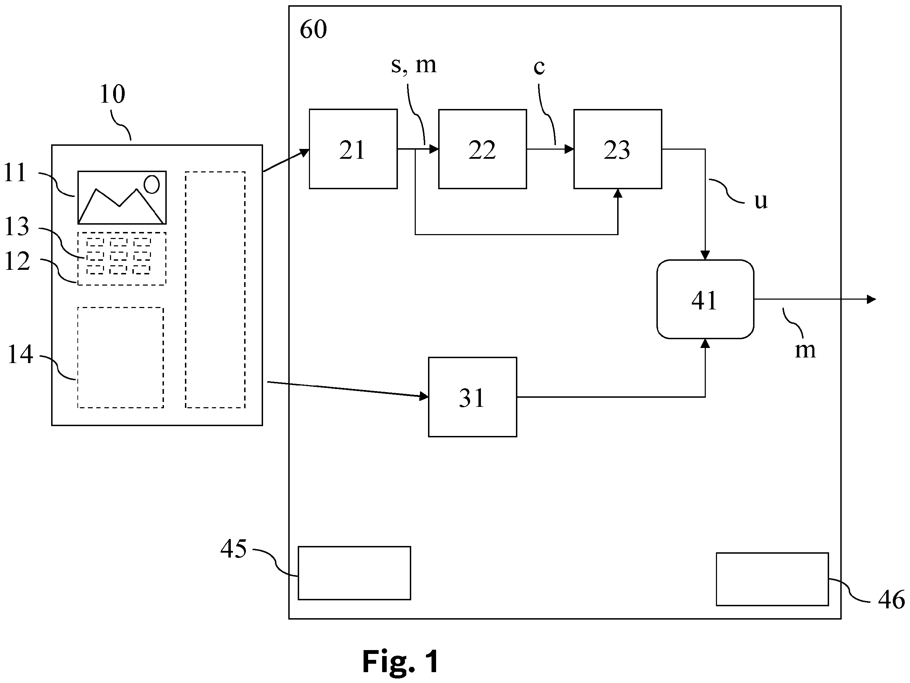

- Figure 1: a method for determining a caption of a figure.

### Description of the embodiments

Figure 1 shows a computer-implemented method for providing a caption of a figure embedded in the image (10) in machine-readable text.

The image (10) comprises at least one figure (11) and a caption (12) of the figure (11). The caption (12) comprises a plurality of words (13), wherein each word (13) has a position in the image characterized by a rectangular bounding box (dashed lines). Each word can be understood as a word image, wherein each word may also be assigned a machine-readable textual representation of the word (e.g., ASCII or UTF8 letters for the pixels of the word image). The image (10) may optionally also comprise other paragraphs (14) that are not caption of the figure (11) or other figures. The image (10) is provided to an optional word detection system (21), which is configured to detect the location of words (13) in the paragraphs (14) and the caption (12). The word detection system (21) may especially be a machine learning system, e.g., a neural network configured for determining the location of word images. The word detection system (30) may preferably also determine a machine-readable text characterizing the respective text displayed by the word images (13).

The spatial locations (s) and the machine-readable text (m) are then preferably forwarded to a layout-aware language model (22), preferably a VILA model. In further embodiments (not shown) the spatial locations (s) and machine-readable text (m) may be provided as meta data of the image (10) and also provided to the layout-aware language model (22). The layout-aware language model (22) then determines a classification (c) of the type of paragraph for each word, wherein the classification may classify a paragraph for each word from the classes of "caption", "text", "title", "header", "footer", or the like.

The spatial locations (s), machine -readable text (m) and the classification (c) for each word is then provided to a clustering system (23). The clustering system (23) is configured for determining connected words based on the positional and semantic information (classification) and clusters the words into clusters, wherein each cluster characterizes a caption (12) of words in the image (10). The clustering system (23) preferably achieves this by first selecting all words with a "caption" classification (c). All other words may be discarded. The words are then preferably clustered into lines. This is achieved by first select the mean y-axis coordinate (coordinate along the vertical axis) for each word (absolute middle of each word in pixel coordinates with respect to the image (10)) and perform clustering, preferably using DBScan. The epsilon neighborhood in DBScan may preferably be set to half of the average height of the words to mitigate noise in the word coordinates. The result are clusters of words, wherein each cluster characterizes a line of words. However, if the document depicted by the image (10) comprises multiple columns, the result may not be good enough.

Hence, for each cluster a median distance between the words (i.e., a median distance between the bounding boxes) may be determined. Clustering may then be run again using DBScan for each cluster, wherein an epsilon neighborhood is set depending on the median distance, e.g., two times the median distance. This then results in clusters of lines of words.

The obtained lines may then be clustered into captions. This may preferably also be achieved by using DBScan. Each line may preferably be encoded by its mean y-coordinate (coordinate along the vertical axis) and the smallest x-coodinate (coordinate along the horizontal axis), e.g., the x-coordinate of the leftmost word in a line. The y-coordinate may, for example, be a mean coordinate of all mean y-coordinates of words in the line. The result of this last clustering are then clusters of captions, wherein each cluster comprises words (13) from the document image (10).

The image (10) may also be provided to a figure extraction system (31) for extracting the figures (11) in the image (10). The figure extracting system (31) preferably uses a neural network such as disclosed by Zhong et al. "PubLayNet: Largest Dataset Ever for Document Layout Analysis." 2019 International Conference on Document Analysis and Recognition (ICDAR) (2019) for extracting the figures (11). Similarly to the words, the figures (11) may be extracted in terms of a rectangular box comprising the coordinates of the respective figure (11) with respect to the image (10), and the pixels of the figure (11).

The extracted figure and the determined clusters of captions may then be compared by a matching system to find a matching pair (m) of caption and extracted figure. Preferably, the Hungarian algorithm may be used to find matching pairs (m), however, any other algorithm for optimal assignment problems could be used here. Preferably, the cost used in the optimal assignment problem is set to the minimum of the absolute pixel distance between the top of the caption and the bottom of the figure and the bottom of the caption and the top of the figure. In addition, a penalty term is preferably added to overlapping figure-caption pairs as these are likely false positives. As this results in a bipartite matching, false positive figure detections are typically discarded. The matching pair is put out as a result of the method.

The method may especially be run on a computer system (60) comprising at least one processor (45) and at least one machine-readable storage medium (46) on which instructions are stored which, if carried out, cause the computer system (60) to carry out the method as disclosed above.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method for classifying an image (10), wherein the classification characterizes a caption (u) of a figure (11) embedded in the image (10), wherein the method comprises the steps of:
• Extracting words (13) and at least one figure (11) from the image (10);
• Clustering the words (10) into clusters of paragraphs (u), wherein each cluster (u) characterizes a paragraph of words in the image (10);
• Determining a match (m) of at least one cluster (u) to the at least one figure (11);
• Providing the at least one cluster (u) as classification characterizing the caption of the at least one figure (11).

2. Method according to claim 1, wherein the step of extracting words (13) and at least one figure (11) from the image (10) comprises the steps of:
• Determining the words (13) and their spatial position from the document (10);
• Providing the image (10) as input to a machine learning system (31), wherein the machine learning system (31) extracts the at least one figure (11) from the image (10).

3. Method according to claim 1 or 2, wherein the step of clustering the words (13) comprises the steps of:
• Determine, for each word of at least a subset of the extracted words (13), a classification (c) characterizing the type of paragraph a respective word (13) belongs to;
• Determining, for words (13) having a common classification (c), lines of words (13) in the image (10);
• Clustering the determined lines of words (13) into clusters (u) of paragraphs.

4. Method according to claim 3, wherein determining the classification (c) for each word (13) of at least the subset is achieved by running optical character recognition on the word and providing the recognized word (m) and its spatial (s) position in the image (10) to a layout aware language model (22), wherein the layout aware language model (22) determines the classification (c) characterizing the type of paragraph.

5. Method according to claim 3 or 4, wherein determining lines of words (13) comprises the steps of:
• Determining, for the words (13) having a common classification (c), a mean coordinate along the vertical axis of each word (13) respectively;
• Determine clusters of words (13) by clustering the words (13) based on a mean coordinate along the vertical axis, wherein each cluster characterizes a line of words;
• For each cluster, determine a median spacing between words (13) in the cluster and determine second clusters based on the distances between the words (13).
• Provide the second clusters as lines of words (13).

6. Method according to any one of the claims 1 to 5, wherein determining a match (m) of at least one cluster (u) to the at least one figure (11) comprises the steps of:
• Providing distances between the at least one figure (11) and the clusters (u) characterizing paragraphs as cost values;
• Determining the match (m) by solving an optimal assignment problem based on the distances.

7. Method according to any one of the claims 1 to 6, wherein at least one but preferably all clusterings are conducted using the DBScan algorithm.

8. Computer-implemented method for searching a figure embedded in an image comprising the steps of:
• Determining matching pairs of captions and figures according to any one of the claims 1 to 7 for a plurality of images and/or a plurality of figures, thereby providing a database of pairs of captions and figures;
• Providing a textual query of a figure to be searched;
• Comparing the query to the captions in the database;
• Providing the figure as search result for which the corresponding caption and the provided query have a largest similarity.

9. Information retrieval system configured to carry out the method according to claim 8.

10. Computer program that is configured to cause a computer to carry out the method according to any one of the claims 1 to 8 with all of its steps if the computer program is carried out by a processor (45).

11. Machine-readable storage medium (46) on which the computer program according to claim 10 is stored.
